# EUROPEAN PATENT SPECIFICATION

(11) **EP 2 936 736 B1**
(45) Date of publication and mention of the grant of the patent: **01.05.2019**
(21) Application number: 12809806.8
(22) Date of filing: 19.12.2012
(51) Int. Cl.: H04L 12/24

(54) **CONFIGURATION DEVICE AND METHOD FOR COMPUTER-IMPLEMENTED CONFIGURATION OF ONE OR MORE NETWORK DEVICES**
KONFIGURATIONSGERÄT UND VERFAHREN FÜR COMPUTER-IMPLEMENTIERTE KONFIGURATION EINES ODER MEHRERE NETZWERKGERÄTE
DISPOSITIF DE CONFIGURATION ET PROCÉDÉ DE MISE EN OEUVRE PAR ORDINATEUR DE CONFIGURATION D'UN OU PLUSIEURS DES DISPOSITIFS DE RÉSEAU

(43) Date of publication of application: 28.10.2015
(73) Proprietor: ABB Schweiz AG, 5400 Baden (CH)
(72) Inventor: VORST, Philipp, 68259 Mannheim (DE); SCHLICH, Bastian, 68219 Mannheim (DE); MAHNKE, Wolfgang, 67310 Hettenleidelheim (DE)
(74) Representative: Marks, Frank
(86) International application number: PCT/EP2012/076202
(87) International publication number: WO 2014/094846

(56) References cited:
- EP-A1- 2 416 245
- WO-A1-2012/119423
- GB-A- 2 467 769
- US-A1- 2007 083 628

## Description

The invention relates to a configuration device and a method for computer-implemented configuration of one or more network devices connectable to an automation communications network. The configuration device comprises a storage interface unit for communicating with at least one storage device arranged to store configuration parameters allocated to a corresponding network device, and a processing unit connected to the storage interface unit and to a user interface unit, where the user interface unit is arranged to transmit displayable information to a graphical display and to receive input information from a user input device,.

In today's industries and large scale automation applications, such as building automation, network communication becomes more and more an essential part, as all electronic devices installed in a plant or factory or large building, or belonging to a transmission or distribution network, can be interconnected with each other, if not directly then across network switches or I/O devices.

The term "network device" comprises every electronic device which has a communication interface, be it a digital or analogue bus interface, be it wire-bound or wireless, and it includes everything from the devices of a central control room over dedicated communication equipment such as switches, routers and I/O devices to control devices and field devices of, for example, a distributed control system. As a result, the communications network or networks of a modern industrial facility may be of considerable size and may contain a considerable number of network nodes. In many automation communications networks, there are several thousand or even more devices that need to be configured.

Accordingly, the engineering and deployment of a communications network in a modern industrial facility, such as the distributed control system of a power plant, require the configuration of a potentially large number of network devices.

In general, the term "engineering" is used here for all kinds of activities which are related to the designing, verification and validation of an automation communications network, while the term "deployment" refers to any activities relating to the installation, configuration and testing of the communications network with the aim to bring the network to an operational state.

During these activities, the configuration of the single network nodes, i.e. the network devices, plays a central role. The term "configuration" means that for each network device several parameter settings have to be adjusted. Even if initially a network device already has reasonable settings, for example based on device template defaults, it is common that many parameters still need to be customized or inevitably have to be changed during the engineering and/or deployment process.

As the configuration is usually performed individually for each network device, a considerable amount of effort is involved when configuring a whole network, where either the network is present in hardware and the deployment engineer attaches a mobile computer device to each and every of the network devices to perform the configuration, or where the network and its devices are represented in an engineering tool by software representations and the configuration has to be performed by frequently selecting the individual software representations.

Accordingly, there is a demand to automate at least parts of the configuring of network devices of an automation communications network.

From US 6,349,306 B1, a method and apparatus for configuration management in communications networks is known, where, in an already existing and fully configured network, configuration settings can be changed, i.e. updated, by using a database. In the database, each network device is represented by a so called model, where each model is assigned to a so called model type. Each model type is associated with attributes which are common to all models belonging to the respective model type, so that a model type can be understood as being analogous to a "class" in object-oriented terminology. In order to load new configuration settings to a group of network devices, first a template is created by selecting a specific model type. The attributes of the model type are filled automatically by screening the database and retrieving the attribute values of the network devices belonging to this specific model type, thereby generating a configuration record. Then, the attribute values in the configuration record may be modified, and the modified configuration record be used to update the present configuration record by loading the modified configuration record to one or more of the models in the database belonging to the specific model type. Once a configuration record is loaded to a model, a network management system will modify the parameters of the network device to conform to the configuration data in the model.

In US 2007083628 A1, a network management system is described for securely managing network elements (NEs) over arbitrary multi-operator networks, via managing copies of NE configuration files on general purpose computers on a network operations center (NOC). The NE hardware implements automated routines by which NE configuration files, including NE program, control and status memory contents, are transferred between NOC and NEs in a customized, secure fashion, while providing an abstraction for software such that the software at both the NOC computers and NEs can handle the NMS communications simply via using common standard file system and networking library functions. This is accomplished by a portal device that functions as a transparent converter between regular LAN file transfers between NOC computers and the portal, and between the customized, secured file transfer format used between the portal and NEs.

WO 2012/119423 discloses copying configuration to a target device allowing to override some configuration parameters that will not be copied to the target device.

It is an object of the present invention to provide a configuration device and a method as explained in the introduction with which configuration of a network device can be automatically defined and/or performed even if the automation communications network is not yet or not yet completely up and running.

This object is achieved by a configuration device and a method according to the independent claims.

In the configuration device, the processing unit is arranged to automatically perform the configuration, after having received a duplication request from the user input device, by
- receiving input information identifying a source network device and at least one target network device, wherein either the at least one target network device or the source and the at least one target network device belong to the one or more network devices,
- retrieving from the at least one storage device source configuration parameters allocated to the source network device, and restriction settings,
- generating target configuration parameters by eliminating from the source configuration parameters those configuration parameters which are indicated by restriction settings not to be automatically overridden in the target network device,
- transmitting the target configuration parameters to the at least one storage device for storing therein.

The present invention is based on the recognition of the following coherences in connection with network device configuration:
- Often, changes applied to one network device also apply to several other network devices in the same automation communications network. This implies to date that modifications have to be manually repeated by an engineer for each device, which process is time consuming and error-prone.
- However, changes made to one network device may need to be repeated on several other devices, but not necessarily on all devices of the same type.
- Often, network devices have identical values for most of their configuration parameters and differ only in few values.
- When parameter values are copied manually by an engineer from one device to other devices, the copying may be subject to errors, e.g., the wrong target parameter is overridden or the configuration is left incomplete due to single forgotten parameters etc..

Accordingly, the configuration device and method according to the invention provide a way to automatically and easily reproduce a configuration or parts of a configuration of a source network device on one or several target network devices, where the process of reproduction is subject to restrictions in order to ensure that those configuration parameters which are not to be changed, as they are for example unique to each network device, are left untouched in the target network device or devices. The source network device and the target network device or devices are identified via user input information, for example through selection of a graphical representation of the respective devices in a computer engineering tool. After the user has decided and accordingly indicated through the appropriate user input that the reproduction, i.e. the copying process, can start, the configuration device automatically performs the configuration of the target network device, or devices, by applying the unrestricted configuration parameters of the source network device.

In other words, the essential idea is to use a configuration duplicator tool implemented in the configuration device to copy configuration parameters from one real network device to another or from one entity in an engineering tool representing a network device to others. The user may for example apply the configuration duplicator tool by first selecting a source entity, e.g., some textual or graphical representation of a network device to copy the configuration from, then selecting and activating the configuration duplicator tool by clicking on a respective icon or function in a menu, and finally selecting one or multiple target entities to copy the unrestricted part of the configuration parameters to.

As the copying and duplicating of configuration parameters is accordingly performed in an automated manner, the reproduction of configurations and therefor the whole process of engineering and deploying an automation communications network becomes more consistent, less timely and less error-prone, as in particular the repetitive parts of configurations can easily be reproduced on all related devices. As a result, the automation communications network operates with higher reliability and availability.

The term "network devices" means here literally all devices which in any way are connected to an automation communication network, where the automation communication network may consist of sub-networks of different network types interconnected with each other. The source network device, from where the configuration parameters are copied, may belong to the same automation communications network as the target network devices, or it may be part of a different communications network.

Examples for possible network device types are "switch", "router", "VLAN switch", "firewall", "operations PC", "field controller", "I/O board" or "printer". Possible configuration parameters may be for example DHCP settings (Dynamic Host Configuration Protocol), IP-address settings (Internet Protocol address), time synchronization settings, as well as information on whether a port is enabled or disabled, which VLAN ID (Virtual Local Area Network Identification) is assigned to a specific port, and further user management configuration of the network device.

The at least one storage device can be one or more central databases to which not only the configuration device but further computer devices may have access and where relevant data of an engineering project for designing and verifying the elements and network devices of an automation communications network for a specific industrial plant or building are stored, including the data belonging to the configuration parameters of the network devices. The at least one storage device can in addition or alternatively be storage devices or storage units implemented in the network devices themselves, either as volatile or as permanent storages, where the configuration device retrieves the source configuration parameters directly from the storage device implemented in the source network device and transmits the target configuration parameters to the storage device implemented in the respective target network device.

The configuration device may be used on the one hand in the field, by a deployment engineer, to connect to the automation communications network which is already, at least in part, installed in the industrial plant or building. On the other hand, the processing unit of the configuration device may interact with a computer-implemented engineering tool, where the engineering tool may be installed on the same configuration device or on a different computer device, and where the automation communications network or at least the network devices or potential network devices of the network are represented in the engineering tool by graphical representations to which the configuration parameters are attached. After finishing the configuration of the network devices of the automation communications network in the engineering tool, the configuration parameters may afterwards automatically be downloaded to the hardware network devices installed in the industrial plant, so that not only engineering but also the subsequent deployment of the communications network is performed in a time optimal and less error-prone way.

In an embodiment of the configuration device, the processing unit is arranged to retrieve the restriction settings from the at least one storage device where they are stored either individually for each network device or for each configuration parameter, or as an attribute to a pre-defined network device type, wherein each network device is assigned a corresponding network device type. Accordingly, the restriction settings may be stored either centrally or locally in each or some of the network devices, and they may be defined for and attached to the above named different elements. The embodiment will now be described using examples.

In general, the restriction settings may result in the copying of certain parts of the configuration or in the copying of selected single parameter settings. For instance, it may be desirable to only copy the settings for time synchronization from one network switch to another, but not the settings for user management. To enable the specification of certain parts of the configuration parameters for copying or not-copying, the properties of a network device may be clustered into categories. It is for example assumed that the configuration parameters of network devices are stored as lists or trees of key-value pairs.

As an example, the configuration parameters of a network switch represented by a tree may look the following:
- Device name: Switch 1
- Management settings:
   ∘ VLAN ID = 1
   ∘ IP address = 10.0.0.250
   ∘ Subnet mask = 255.255.255.0
- Port settings:
   ∘ Port 1
   ∘ Name = ""
   ∘ Speed = 100 Mbit/s
- VLAN settings:
   ∘ VLAN-aware = true

This configuration has a composite, hierarchical structure where single parameter values are stored in the leaves of the tree representation. The categories "device name", "management settings", "port settings" and "VLAN settings" subsume parameters on lower levels. The highest level of the configuration is the device itself.

Accordingly, in the restriction settings stored in connection with the device "Switch 1", it can be indicated that only the port and VLAN settings are allowed to be copied from and to the device while the management settings are only allowed to be copied from "Switch 1", i.e. the device may function as a source network device, but they are never allowed to be copied to "Switch 1", i.e. they need to remain unchanged.

Copying parts of configurations may for example be needed if security-related configuration information is to be copied to a device that is part of another subnet. Accordingly, in order to not copy the IP-related configuration, as this could break the connection with the network device, the management settings are excluded from the duplication process. Another example is the case where hardware-related configuration settings are to be copied to all devices of the same network device type. In this case, it may be preferable only to reproduce the hardware-related configuration settings, such as port settings, because the network devices might belong to different subnets or different security zones. Copying the other parameter settings might break the communication with the network devices.

Further, there are properties that are only valid on one network device; copying them to another device could render one or both entities useless. Examples of such parameters are the MAC and IP addresses of network devices, which should be unique in a communications network. In order to forbid overwriting certain properties, they can be marked as "protected", i.e. as permanently restricted from being overridden. Protected properties will never be copied to other network devices; however, they may be allowed to be retrieved by the configuration device and stored in a central place in order to be used for engineering purposes.

The protection can be configured by storing in the at least one storage device a corresponding restriction setting telling the configuration duplicator tool which specific configuration parameters are protected. By default, configuration parameters are not protected. Protection can also be defined dependent on a certain network device type; that is, for one device type some configuration parameters are not protected, while for other types the configuration parameters with the very same meaning might be protected. For example, a security-relevant network device might have more parameter settings protected than a user terminal device.

In a further embodiment, the processing unit is arranged to retrieve the restriction settings by transmitting a user query to the graphical display for selecting single configuration parameters or a pre-defined sub-part of the source configuration parameters and by receiving the resulting input information.

In other words, the restriction settings can be obtained from a user input which is entered directly in connection with evoking the configuration duplicator tool. For example, a user may select a part of the configuration parameters which are to be copied - and the processing unit accordingly interprets the remaining configuration parameters to be restricted from copying - where the selection of the part to be copied can be achieved by one of the following:
- Expanding in a tree view of the network devices and corresponding sub-trees of their configuration parameters the node of the network device which is to be chosen as source or target network device, followed by marking the desired category or categories of the configuration parameters to be copied, or
- Selecting the desired or restricted parts of a configuration from a context menu when clicking on the representation of the desired network device, where the representation may be an item in a tree view or an icon or object in a graphical view of the communications network, or
- Selecting the desired or restricted parts of a configuration from an explicit widget of a view of the configuration parameters of a selected network device, where the network device was selected in another view.

Further, a user may select only single parameter settings instead of complete categories. The selection is done analogously to what is explained above with respect to the selection of parameter categories or parts of configuration parameters, where the selected element only contains the single configuration parameter instead, which is to be expressly copied or excluded from copying. For example, a user may select to only copy a new DNS server address to all devices in a certain subnet.

Even further, a user may constrain the targets of the duplication process. For example, it may be useful to restrict the copy process to network devices either of the same type or of a selectable type. This way, it becomes possible, for instance, to copy configurations from one specific switch to all switches of the same type, or to all switches, but not to routings firewalls.

As already mentioned above, the configuration device may either be used in connection with an engineering tool or it may be directly connected to the at least one target network device and - possibly, if the corresponding configuration parameters are not retrieved from a central database - to the source network device. For an embodiment in connection with the latter alternative, the configuration device comprises a network interface unit connected to the processing unit for communicating with the source and/or target network device over the communications network, the source and/or target network device each comprise one of the storage devices, and the processing unit is arranged to retrieve from and/or initiate storing in the respective one of the storage devices the respective configuration parameters.

This embodiment may be advanced by arranging the processing unit so that it, prior to retrieving the source configuration parameters, discovers which network devices are connected to the automation communications network.

Even further, the processing unit may be arranged, prior to initiating storing the target configuration parameters, to transmit a user query to the graphical display for accepting the target configuration parameters, to receive the resulting input information and to initiate the storing only if the input information indicates acceptance of the target configuration parameters. After the storing is completed, the processing unit may verify whether the storing of the target configuration parameters was performed correctly.

These embodiments are now further explained.
As discussed above, in engineering of communications networks, the designed configurations always relate to some hardware devices that, sooner or later, should receive the planned configurations. In this context, often occurring issues and tasks are:
- The need to quickly retrieve, store and document the configuration of some network device that is already in operation.
- The occurrence of mismatches between designed and actually implemented configurations of devices.
- The need to re-plan an existing installation for which a documentation is non-existent.

Therefore, by having a network interface unit in the configuration device that is capable of establishing connections to running network devices so that the processing unit may read and/or write their configurations, it becomes possible to transfer the configuration duplicator tool from an offline to an online or operations mode and to tackle the above listed tasks and issues.

In practice, the configuration duplicator tool may work as follows: In addition to the views of designed network devices, a view is provided to the user that contains the network devices discovered in the actually running network. The functionality of the configuration duplicator tool is then supported with online access to the discovered network devices as well, where all functions and embodiments described above apply. By contrast to the offline configuration duplicator tool, now at least the source network device or the target network device corresponds to a device of the running network. This way, a configuration can be retrieved easily from one real network device, stored in the central database and reproduced on other real network devices by storing it in their respective local storage devices or units. Storing the configuration parameters to the actual hardware - i.e., the deployment step - can be accompanied by a query or acknowledgement by the user, since it can critically affect the behavior of the running network.

The step of verifying whether the duplication process was performed successfully and correctly may for example be performed by the processing unit by retrieving the newly stored configuration parameters from the respective storage device and comparing them with the target configuration parameters. If the parameters differ, the processing unit may initiate a repetition of the storing of the target configuration parameters, and/or it may transmit corresponding display information to the user interface unit for informing the user about the problem.

The copying of configuration parameters from one network device to another is generally vendor-independent, i.e. the same configuration parameters can be spread over devices of the same type or function but of different vendors or models. In a specific extension of the invention, it is provided to simultaneously with the copying of configuration parameters allow for a change of the type of the target device. Accordingly, it is suggested that the source configuration parameters contain a parameter on a network device type assigned to the source network device. For example, if the source and target network devices are each a network switch of a different vendor and if the configuration parameters of the source network device comprise the source vendor as a parameter, which is unaffected by any restriction setting, then the copying process performed by the processing unit of the configuration device will not only apply the usual source configuration parameters to the target switch, but also result in the target switch becoming an instance of the switch model that the source incorporates. It is possible that a user may choose by selecting between two icons whether the configuration duplicator tool should work with or without changing the type or model of the target device.

As already described above, the duplication request may be generated by a user through clicking on a respective icon or function in a menu. Alternatively, the processing unit may be arranged to recognize the duplication request from the user input device when a duplication icon in a graphical representation of the source network device is selected and the graphical representation of the source network device is dragged towards and dropped onto a graphical representation of the target network device. As a result, the copying process of the configuration parameters will be executed after a drag and drop operation involving a particular duplication icon was performed. This is independent of whether or not the user interface is textual or graphical, as long as there is a disambiguation from other drag and drop functions that do not aim at copying the configurations of network devices.

When selecting the at least one target network device, the user may specify multiple target network devices by selecting a group of target network devices. For this purpose, the processing unit is arranged to receive an input information identifying the at least one target network device as a group of target network devices, wherein the input information indicates a selection of several single network devices, or a network device type, or a hierarchy level in a tree structure of the one or more network devices.

This means that network devices can be grouped to form higher-level entities, to which the configuration duplicator tool can be applied. One possible variant is that the network devices are grouped hierarchically, which results for example in the definition of sub-networks of the automation communication network, or in the hierarchical grouping of the network devices according to a function- or location-related level in the industrial plant or building where the automation communications network is installed, or in the definition of a central network node which groups several network ports or network interfaces as sub-entities which in addition implies the restriction setting that only the configuration parameters for the network ports or interfaces are to be copied. Possible function- or location-related hierarchy levels may be "Plant", "Plant Unit or Plant Area", "Production line" etc.

In another possible variant, the network devices are grouped according to an attached group label, where each network device can be associated with several group labels if it shares certain functions or roles with other devices. For example, both a network switch and a switched automation controller can carry the label "switch", while the controller and another controller will carry the label "controller". Another example is that both a routing firewall and an automation controller with enhanced security could carry the label "packet filtering device".

According to the possibility for selecting a group of target network devices, it can be noted that based on the present invention un-restricted configuration parameters can either be copied from one network device A to exactly one second network device B on the same hierarchy level, or from one network device A to a group of network devices selected by a hierarchy level B higher than A, in which case the configuration parameters will be copied to all network devices that belong to B and all the way down the hierarchy, as far as the configuration parameters in A can be applied to the sub-entities of B, or from one entity A to a group B of network devices which were particularly labeled or selected, in which case the configuration parameters will be copied to all network devices that belong to B.

The processing unit may be further arranged to add to each target configuration parameter a marking indicating that the configuration parameter has been copied and to initiate storing of the marking for later graphical displaying. In this way, a visual feedback is given to an operator to easily identify automatically configured parameters of the network devices. In this way, later trouble-shooting is supported.

The embodiments of the method for computer-implemented configuration of one or more network devices connectable to an automation communications network include all the steps performed by the elements and units contained in the above-described configuration device.

The invention and its embodiments will become more apparent from the examples described below in connection with the appended drawing which illustrates:
- Fig. 1: a configuration device.
- Fig. 2: a method for computer-implemented configuration of one or more network devices.
- Figs. 3a-3d: a visual interface for using the configuration duplicator tool of the configuration device of Fig. 1,
- Fig. 4: an example of graphically marking configuration parameters which were configured automatically,
- Fig. 5: an example of a context menu for choosing restriction settings,
- Figs. 6a, 6b: an example of initiating the copying of configuration parameters via drag and drop.

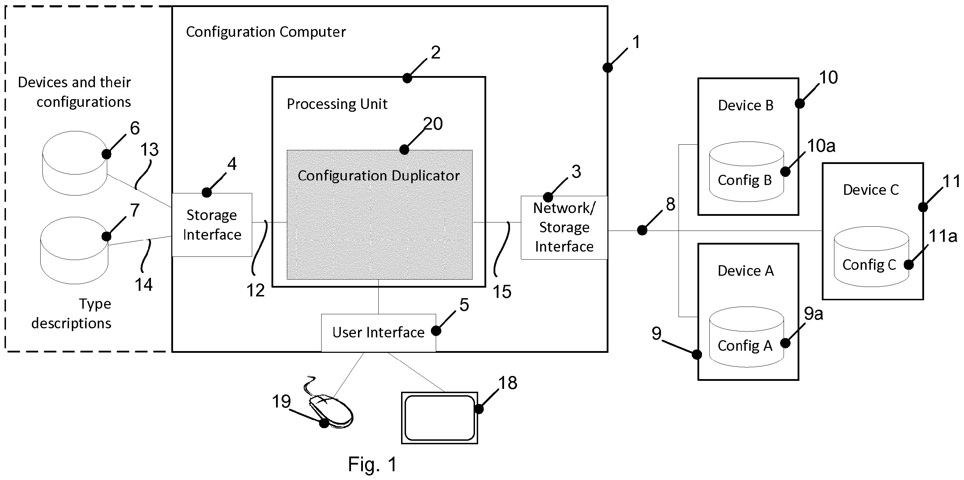

In Fig. 1, a configuration device 1, also called configuration computer, for computer-implemented configuration of one or more network devices 9, 10, 11 connectable to an automation communications network 8 of an industrial plant or a large building is shown. The configuration device 1 comprises
- a storage interface unit 4 for communicating with storage devices 6, 7 which are here external databases, wherein storage device 6 is arranged to store a data representation including configuration parameters for each network device 9, 10, 11 and wherein storage device 7 is arranged to store descriptions of network device types,
- a combined network and storage interface unit 3 for communicating with network devices 9, 10, 11 and for communicating with their integrated storage devices or storage units 9a, 10a, 11a, respectively, where the integrated storage units 9a to 11a may for example be EPROM, EEPROM, Flash Memory or NVRAM modules which individually store the configuration parameters of their respective network device,
- a user interface unit 5 for transmitting displayable information to a graphical display 18 and for receiving input information from a user input device, here a computer mouse 19, and
- a processing unit 2 connected to the storage interface unit 4, the combined network and storage interface unit 3 and the user interface unit 5.

Instead of being external databases, storage devices 6 and 7 could as well be integrated memory modules of the configuration computer 1. Further, instead of being implemented internally in the configuration device 1, user interface unit 5 could as well belong to another computer device which provides the user interface functionality to configuration device 1.

The processing unit 2 is arranged to execute a configuration duplicator tool 20, which may, for example, be integrated as an additional function into an engineering tool. The engineering tool is executed by processing unit 2, as well. The user interface 5 serves the interaction with a user and is able to initiate displaying of all the views which will be explained in connection with the following figures.

The processing unit 2, and thereby the configuration duplicator tool 20, has read and write access to the data of the descriptions of network device types stored in database 7 and to the data about network devices and their configurations to be used in an engineering project currently edited in the engineering tool and stored in database 6. Since parts of the configuration parameters are protectable and thereby restricted from copying, the configuration parameters are all stored in the additional database 6, i.e. in an extra storage component which itself can be particularly protected. Technically, however, this information could also be stored together with the network device type descriptions in one place.

In order to be able to copy configuration parameters to real hardware devices, configuration device 1 requires the network interface unit 3 which is for example composed of a network driver and a physical network interface card and which is able to establish a communication connection to the network devices 9 to 11 over network 8. In addition, processing unit 2 is arranged to perform a discovery of network devices on the network 8, i.e. it is able to communicate via network interface unit 3 to first recognize - at that point unknown - network devices 9 to 11 which are connected to network 8, to afterwards retrieve at least some of their relevant data, which may include their configuration parameters and network device types, from the respective storage units 9a to 11a, and to store these relevant data in databases 6 and 7.

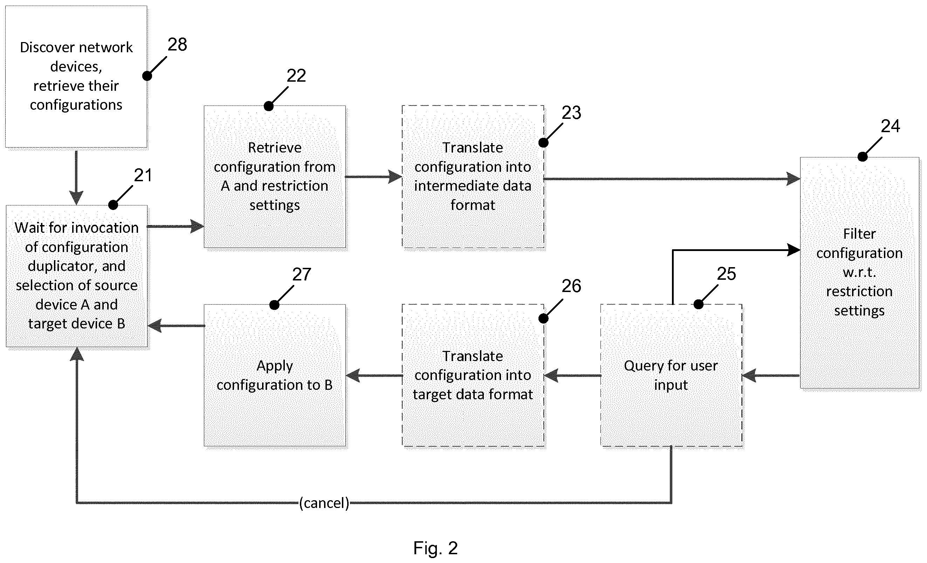

In connection with Figs. 2 to 6b, operation of processing unit 2 is now described further. In a preparatory step 28, the processing unit 2 discovers which network devices are connected to network 8 and retrieves and stores at least their names and types, but possibly also their respective configuration parameters.

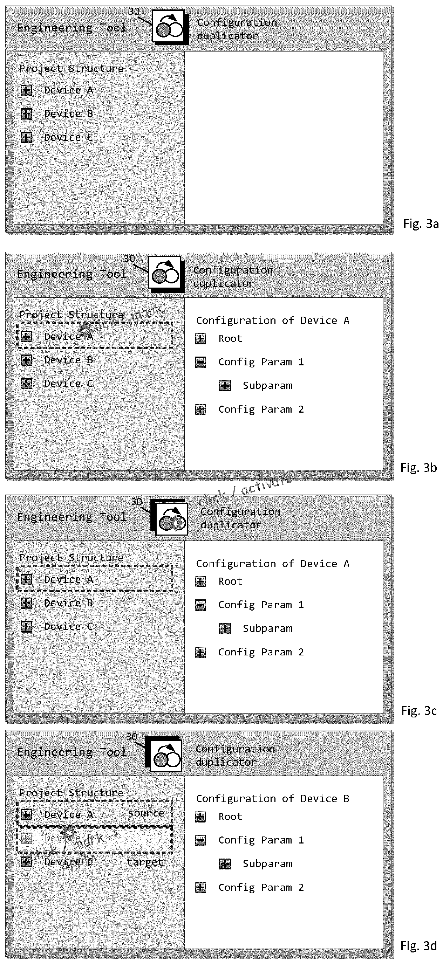

Afterwards, in step 21, the configuration duplicator tool 20 of processing unit 2 waits to be invoked by a user, i.e. it waits to receive via user interface 5 the corresponding duplication request, which may for example be given by clicking on configuration duplicator icon 30 as shown in Fig. 3a. Further, the configuration duplicator tool 20 waits that a source network device, for example device A (device 9 in Fig. 1), and one or more target network devices, for example device B (device 10 in Fig. 1), are chosen. This can be achieved by clicking on respective entries in a list of network devices, as shown in Figs. 3b and 3d on the left hand side, where "Device A" is selected as the source network device and "Device B" as the target network device.

The sequence of expected user inputs may for example be defined as shown in Figs. 3a to 3d. In Fig. 3a, it can be seen how the configuration duplicator tool 20 is visually integrated into an engineering tool by adding the configuration duplicator icon 30. The configuration duplicator tool 20 is in a waiting state. First, the user selects "Device A" as shown in Fig. 3b. Afterwards, the user activates the configuration duplicator tool 20 by clicking on icon 30, as in Fig. 3c. This triggers the configuration duplicator tool 20 to recognize the last selected network device, "Device A", as source network device. The next user input is expected to be the selection of the target network device or devices, i.e. the marking of "Device B" shown in Fig. 3d identifies this device as target network device.

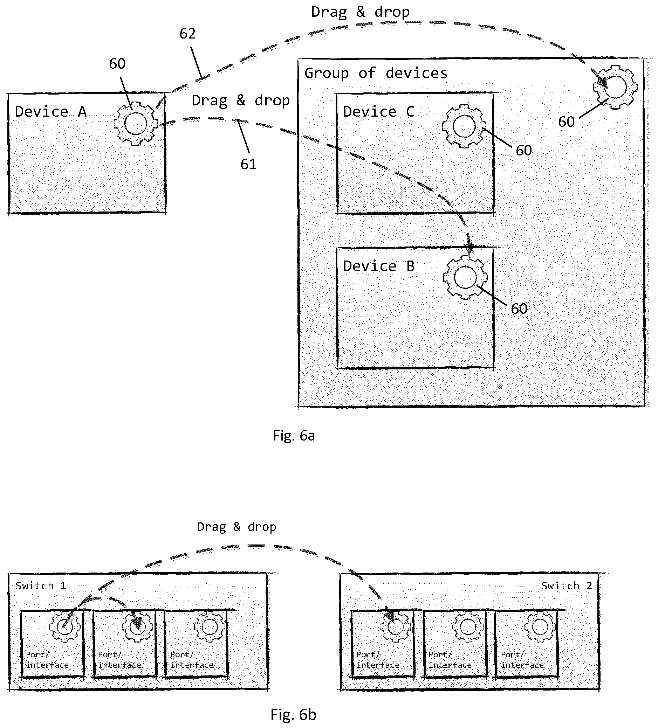

An alternative way of inputting the three required user input information - source network device, target network device and duplication request - is shown in Figs. 6a and 6b to be a drag operation performed while clicking on a pre-defined drag-and-drop icon 60 in the graphical representation of the source network device A, combined with a drop operation onto just onto a graphical representation of the target network device or group of target network devices, or, as indicated in Fig. 6a, onto the drag-and-drop icon 60 of the graphical representation of the target network device B (operation 61) or of the group of target network devices (operation 62). In Fig. 6b, it is indicated that together with the source and target network devices, here Switch 1 and Switch 2, specific parts of these network devices may be indicated by clicking on the drag-and-drop icon within the graphical representation of these parts, here port or network interfaces. As a result, together with the above named three user input information, a restriction setting is additionally input to configuration duplicator tool 20 in the sense that apart from the configuration parameters of the respective device parts no further configuration parameters shall be copied.

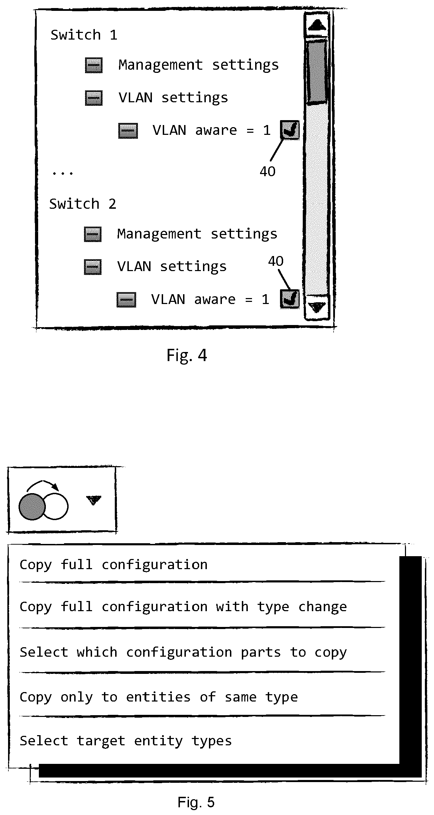

If the three user input information is available, the next step 22 (Fig. 2) is triggered, where the configuration duplicator tool 2 retrieves the configuration parameters "Config A" of the source network device A, either by reading them from the engineering tool's database 6 or, alternatively, by accessing the storage unit 9a of physical device 9. In addition, it retrieves the applicable restriction settings. One possible way of obtaining them is already described in connection with Fig. 6b. Another way can be understood from Fig. 5, which shows a context menu for choosing restriction settings. The different possible ways to restrict the duplication of configuration parameters are already described above in connection with the possible embodiments of the present invention.

The next step 23 is optional, which is indicated by the dotted line. This step may usually be required if the configuration parameters are retrieved from the real network devices 9 to 11 and if their data format - as it is used in the local storage units 9a to 11a - differs from the data format used in the engineering tool and in database 6, as the engineering tool and the central database 6 are usually related. In step 23, the configuration duplicator tool translates the configuration parameters "Config A" either into an intermediate data format that is neither specific to the corresponding network device A nor to the engineering tool and therefor to the central database 6, or into the data format of the engineering tool and database 6.

Afterwards, in step 24, the configuration duplicator tool 20 generates the target configuration parameters "Config B" by filtering the configuration parameters "Config A" according to the retrieved restriction settings. The filtering is performed by eliminating from the source configuration parameters "Config A" those configuration parameters which are indicated by the restriction settings not to be copied to the target network device B.

The following two steps, steps 25 and 26, are again optional. In step 25, the configuration duplicator tool 20 may query the user to acknowledge the generated target configuration parameters and/or to correct or refine the restriction settings. If the user does not acknowledge the target configuration parameters, the copying process is cancelled and the configuration duplicator tool 20 returns to waiting step 21. If the user enters corrected or refined restriction settings, the configuration duplicator tool 20 returns to filtering step 24.

If the user acknowledges the target configuration parameters "Config B", the configuration duplicator tool 20 continues with step 26 in the case that the data format used for generating the target configuration parameters differs from the data format used at the respective storage device where the target configuration parameters are to be stored, where the storage device can be the central database 6 or the local storage unit 10a, and where the data format used during generation of the target configuration parameters can be the above explained intermediate data format or the data format of the engineering tool. Accordingly, during step 26, the target configuration parameters are translated into the target data format, i.e. into the data format used by the respective storage device 10a or 6.

Afterwards or - if no translation is required - directly after step 24 or 25, the configuration duplicator tool 20 applies the target configuration parameters "Config B" to the target network device B, by transmitting the target configuration parameters to the local storage unit 10a and/or to the central database 6. In case that the target configuration parameters are only transmitted to the database 6, it can be provided that a separate deployment step will be initiated at a later stage during which all configuration parameters stored in database 6 are downloaded to the network devices 9, 10 and 11.

The configuration parameters of device B which were changed automatically during the above described duplication process can be particularly marked as indicated in Fig. 4 and the marking can be visualized on graphical display 18 by adding for example a certain icon 40 to each marked configuration parameter.

It is again emphasized that the embodiments of the method for computer-implemented configuration of one or more network devices include all the steps performed by the elements and units contained in the above-described configuration device 1.

## Claims

1. Configuration device (1) for computer-implemented configuration of a plurality of network devices (9, 10, 11) connectable to an automation communications network (8) for a specific industrial plant or building, the automation communications network containing a plurality of network nodes, the configuration device comprising
• a storage interface unit (4) for communicating with at least one storage device (6, 7, 9a to 11a) arranged to store configuration parameters allocated to a corresponding network device (9, 10, 11), and
• a processing unit (2) connected to the storage interface unit (4) and to a user interface unit (5), where the user interface unit (5) is arranged to transmit displayable information to a graphical display (18) and to receive input information from a user input device (19), wherein
• the processing unit (2) is arranged to automatically perform the configuration, after having received a duplication request from the user input device (19), by
∘ receiving input information identifying a source network device (A) and a selected group of target network devices (B, C), wherein the selected group of target network devices (B, C) includes target network devices with a first and at least another device type,
∘ retrieving from the at least one storage device (6, 7, 9a to 11a) source configuration parameters allocated to the source network device (A), and restriction settings specifying that for the first device type a particular set of configuration parameters is protected, while for at least another device type the particular set of configuration parameters is not protected,
∘ generating target configuration parameters for the selected group of target network devices in accordance with the restriction settings by eliminating, for target network devices with the first device type, from the source configuration parameters those configuration parameters which are indicated by the restriction settings for the first device type as specific protected configuration parameters not to be automatically overridden in the selected group of target network devices (B, C) to ensure that those configuration parameters which are not to be changed are left untouched in the selected group of target network devices,
∘ transmitting the target configuration parameters to the at least one storage device (6, 7, 9a to 11a) for storing therein, and
∘ performing the configuration of the selected group of target network devices by applying the target configuration parameters.

2. Configuration device (1) according to claim 1, wherein the processing unit (2) is arranged to retrieve the restriction settings from the at least one storage device (6, 7, 9a to 11a) where they are stored
• either individually for each network device or for each configuration parameter,
• or as an attribute to a pre-defined network device type, wherein each network device is assigned a corresponding network device type.

3. Configuration device (1) according to claim 1 or 2, wherein the processing unit (2) is arranged to retrieve the restriction settings by transmitting a user query to the graphical display (18) for selecting single configuration parameters or a pre-defined sub-part of the source configuration parameters and by receiving the resulting input information.

4. Configuration device (1) according to any of the previous claims, wherein the configuration device comprises a network interface unit (3) connected to the processing unit (2) for communicating with the source and/or target network device (9, 10, 11) over the automation communications network (8), the source and/or target network device (9, 10, 11) each comprise one of the storage devices (9a to 11a), and the processing unit (2) is arranged to retrieve from and/or initiate storing in the respective one of the storage devices the respective configuration parameters.

5. Configuration device (1) according to claim 4, wherein the processing unit (2) is arranged, prior to retrieving the source configuration parameters, to discover which network devices are connected to the automation communications network.

6. Configuration device (1) according to claim 4 or 5, wherein the processing unit (2) is arranged, prior to initiating storing the target configuration parameters, to transmit a user query to the graphical display (18) for accepting the target configuration parameters, to receive the resulting input information and to initiate the storing only if the input information indicates acceptance of the target configuration parameters.

7. Configuration device (1) according to any of claims 4 to 6, wherein the processing unit (2) is arranged to verify whether the storing of the target configuration parameters was performed correctly.

8. Configuration device (1) according to any of the previous claims, wherein the source configuration parameters contain a parameter on a network device type assigned to the source network device.

9. Configuration device (1) according to any of the previous claims, wherein the processing unit (2) is arranged to recognize the duplication request from the user input device (19) when a duplication icon in a user menu is selected.

10. Configuration device (1) according to any of the previous claims 1 to 8, wherein the processing unit (2) is arranged to recognize the duplication request from the user input device (19) when a duplication icon in a graphical representation of the source network device is selected and the graphical representation of the source network device is dragged towards and dropped onto a graphical representation of the target network device.

11. Configuration device (1) according to any of the previous claims, wherein the processing unit (2) is arranged to receive an input information identifying the at least one target network device as a group of target network devices, wherein the input information indicates a selection of several single network devices, or a network device type, or a hierarchy level in a tree structure of the plurality of network devices.

12. Configuration device (1) according to any of the previous claims, wherein the processing unit (2) is arranged to add to each target configuration parameter a marking indicating that the configuration parameter has been copied and to initiate storing of the marking for later graphical displaying.

13. Method for computer-implemented configuration of a plurality of network devices (9, 10, 11) connectable to an automation communications network (8) for a specific industrial plant or building, the automation communications network containing a plurality of network nodes, the method comprising
• communicating with at least one storage device (6, 7, 9a to 11a) arranged to store configuration parameters allocated to a corresponding network device (9, 10, 11), and
• transmitting displayable information to a graphical display (18) and receiving input information with a configuration parameter duplication request from a user input device (19), wherein
• automatically performing the configuration, after having received the duplication request from the user input device (19), by
∘ receiving input information identifying a source network device (A) and a selected group of target network devices (B, C), wherein the selected group of target network devices (B, C) includes target network devices with a first and at least another device type,
∘ retrieving from the at least one storage device (6, 7, 9a to 11a) source configuration parameters allocated to the source network device (A), and restriction settings specifying that for the first device type a particular set of configuration parameters is protected, while for at least another device type the particular set of configuration parameters is not protected,
∘ generating target configuration parameters for the selected group of target network devices in accordance with the restriction settings by eliminating, for target network devices with the first device type, from the source configuration parameters those configuration parameters which are indicated by the restriction settings for the first device type as specific protected configuration parameters not to be automatically overridden in the selected group of target network devices (B, C) to ensure that those configuration parameters which are not to be changed are left untouched in the selected group of target network devices,
∘ transmitting the target configuration parameters to the at least one storage device (6, 7, 9a to 11a) for storing therein, and
∘ performing the configuration of the selected group of target network devices by applying the target configuration parameters.

14. The configuration device (1) of any of the claims 1 to 12, wherein the corresponding network device has a device type selected from any one of the group of: switch, router, VLAN switch, firewall, operations PC, field controller, I/O board, and printer.

15. The configuration device (1) of any of the claims 1 to 12, wherein the automation communication network consists of sub-networks of different network types interconnected with each other, the sub-networks resulting from a hierarchical grouping of the network devices.

16. The configuration device (1) of any of the claims 1 to 12, wherein simoultaneously with applying configuration parameters to a particular target device, changing the type of the target device.

## Patentansprüche

1. Konfigurationsvorrichtung (1) für eine computerimplementierte Konfiguration mehrerer Netzvorrichtungen (9, 10, 11), die mit einem Automatisierungskommunikationsnetz (8) für eine spezifische Industrieanlage oder ein spezifisches Industriegebäude verbunden werden können, wobei das Automatisierungskommunikationsnetz mehrere Netzknoten enthält, wobei die Konfigurationsvorrichtung Folgendes umfasst:
- eine Speicherschnittstelleneinheit (4) zum Kommunizieren mit mindestens einer Speichervorrichtung (6, 7, 9a bis 11a), die ausgelegt ist, Konfigurationsparameter, die einer entsprechenden Netzvorrichtung (9, 10, 11) zugeteilt sind, zu speichern, und
- eine Verarbeitungseinheit (2), die mit der Speicherschnittstelleneinheit (4) und einer Anwenderschnittstelleneinheit (5) verbunden ist, wobei die Anwenderschnittstelleneinheit (5) ausgelegt ist, anzeigbare Informationen an eine graphische Anzeige (18) zu senden und Eingangsinformationen von einer Anwendereingabevorrichtung (19) zu empfangen, wobei
- die Verarbeitungseinheit (2) ausgelegt ist, die Konfiguration automatisch auszuführen, nachdem sie eine Duplizieranforderung von der Anwendereingabevorrichtung (19) empfangen hat, durch
- Empfangen von Eingangsinformationen, die eine Quellennetzvorrichtung (A) und eine ausgewählte Gruppe von Zielnetzvorrichtungen (B, C) identifizieren, wobei die ausgewählte Gruppe von Zielnetzvorrichtungen (B, C) Zielnetzvorrichtungen mit einem ersten und mindestens einem anderen Vorrichtungstyp enthält,
- Erfassen von der mindestens einen Speichervorrichtung (6, 7, 9a bis 11a) von Quellenkonfigurationsparametern, die der Quellennetzvorrichtung (A) zugeteilt sind, und Einschränkungseinstellungen, die spezifizieren, dass für den ersten Vorrichtungstyp eine bestimmte Gruppe von Konfigurationsparametern geschützt ist, während für mindestens einen anderen Vorrichtungstyp die bestimmte Gruppe von Konfigurationsparametern nicht geschützt ist,
- Erzeugen von Zielkonfigurationsparametern für die ausgewählte Gruppe von Zielnetzvorrichtungen in Übereinstimmung mit den Einschränkungseinstellungen durch Eliminieren für Zielnetzvorrichtungen mit dem ersten Vorrichtungstyp von den Quellenkonfigurationsparametern solche Konfigurationsparameter, die durch die Einschränkungseinstellungen für den ersten Vorrichtungstyp als spezifische geschützte Konfigurationsparameter angegeben sind, die nicht automatisch in der ausgewählten Gruppe von Zielnetzvorrichtungen (B, C) zu überschreiben sind, um zu gewährleisten, dass solche Konfigurationsparamater, die nicht zu ändern sind, in der ausgewählten Gruppe von Zielnetzvorrichtungen unberührt bleiben,
- Senden der Zielkonfigurationsparameter an die mindestens eine Speichervorrichtung (6, 7, 9a bis 11a), um sie darin zu speichern, und
- Ausführen der Konfiguration der ausgewählten Gruppe von Zielnetzvorrichtungen durch Anwenden der Zielkonfigurationsparameter.

2. Konfigurationsvorrichtung (1) nach Anspruch 1, wobei die Verarbeitungseinheit (2) ausgelegt ist, die Einschränkungseinstellungen aus der mindestens einen Speichervorrichtung (6, 7, 9a bis 11a), wo sie gespeichert sind, zu erfassen,
- entweder individuell für jede Netzvorrichtung oder für jeden Konfigurationsparameter,
- oder als ein Attribut zu einem vordefinierten Netzvorrichtungstyp, wobei jeder Netzvorrichtung ein entsprechender Netzvorrichtungstyp zugewiesen ist.

3. Konfigurationsvorrichtung (1) nach Anspruch 1 oder 2, wobei die Verarbeitungseinheit (2) ausgelegt ist, die Einschränkungseinstellungen durch Senden einer Anwenderanfrage an die graphische Anzeige (18) zum Auswählen einzelner Konfigurationsparameter oder eines vordefinierten Unterteils der Quellenkonfigurationsparameter und durch Empfangen der sich ergebenden Eingangsinformationen zu erfassen.

4. Konfigurationsvorrichtung (1) nach einem der vorhergehenden Ansprüche, wobei die Konfigurationsvorrichtung eine Netzschnittstelleneinheit (3) umfasst, die mit der Verarbeitungseinheit (2) zum Kommunizieren mit der Quellen- und/oder der Zielnetzvorrichtung (9, 10, 11) über das Automatisierungskommunikationsnetz (8) verbunden ist, wobei die Quellen- und/oder die Zielnetzvorrichtung (9, 10, 11) jeweils eine der Speichervorrichtungen (9a bis 11a) umfasst und die Verarbeitungseinheit (2) ausgelegt ist, von der jeweiligen der Speichervorrichtung die jeweiligen Konfigurationsparameter zu erfassen und/oder das Speichern der jeweiligen Konfigurationsparameter in der jeweiligen Speichervorrichtung einzuleiten.

5. Konfigurationsvorrichtung (1) nach Anspruch 4, wobei die Verarbeitungseinheit (2) ausgelegt ist, vor dem Erfassen der Quellenkonfigurationsparameter herauszufinden, welche Netzvorrichtungen mit dem Automatisierungskommunikationsnetz verbunden sind.

6. Konfigurationsvorrichtung (1) nach Anspruch 4 oder 5, wobei die Verarbeitungseinheit (2) ausgelegt ist, vor dem Einleiten des Speicherns der Zielkonfigurationsparameter, eine Anwenderanfrage an die graphische Anzeige (18) zum Annehmen der Zielkonfigurationsparameter zu senden, um die sich ergebenden Eingangsinformationen zu empfangen und das Speichern nur dann einzuleiten, wenn die Eingangsinformationen eine Annahme der Zielkonfigurationsparameter angeben.

7. Konfigurationsvorrichtung (1) nach einem der Ansprüche 4 bis 6, wobei die Verarbeitungseinheit (2) ausgelegt ist, zu überprüfen, ob das Speichern der Zielkonfigurationsparameter korrekt ausgeführt wurde.

8. Konfigurationsvorrichtung (1) nach einem der vorhergehenden Ansprüche, wobei die Quellenkonfigurationsparameter einen Parameter über einen Netzvorrichtungstyp enthalten, der der Quellennetzvorrichtung zugewiesen ist.

9. Konfigurationsvorrichtung (1) nach einem der vorhergehenden Ansprüche, wobei die Verarbeitungseinheit (2) ausgelegt ist, die Duplizieranforderung von der Anwendereingabevorrichtung (19) zu erkennen, wenn ein Dupliziersymbol in einem Anwendermenü ausgewählt wird.

10. Konfigurationsvorrichtung (1) nach einem der vorhergehenden Ansprüche 1 bis 8, wobei die Verarbeitungseinheit (2) ausgelegt ist, die Duplizieranforderung von der Anwendereingabevorrichtung (19) zu erkennen, wenn ein Dupliziersymbol in einer graphischen Repräsentation der Quellennetzvorrichtung ausgewählt wird und die graphische Repräsentation der Quellennetzvorrichtung in Richtung einer graphischen Repräsentation der Zielnetzvorrichtung gezogen und darauf abgelegt wird.

11. Konfigurationsvorrichtung (1) nach einem der vorhergehenden Ansprüche, wobei die Verarbeitungsvorrichtung (2) ausgelegt ist, Eingangsinformation zu empfangen, die die mindestens eine Zielnetzvorrichtung als eine Gruppe von Zielnetzvorrichtungen identifizieren, wobei die Eingangsinformationen eine Auswahl einiger einzelner Netzvorrichtungen oder einen Netzvorrichtungstyp oder eine Hierarchiestufe in einer Baumstruktur der mehreren Netzvorrichtungen angeben.

12. Konfigurationsvorrichtung (1) nach einem der vorhergehenden Ansprüche, wobei die Verarbeitungseinheit (2) ausgelegt ist, zu jedem Zielkonfigurationsparameter eine Markierung hinzuzufügen, die angibt, dass der Konfigurationsparameter kopiert wurde, und ein Speichern der Markierung für ein späteres graphisches Anzeigen zu einzuleiten.

13. Verfahren für eine computerimplementierte Konfiguration mehrerer Netzvorrichtungen (9, 10, 11), die mit einem Automatisierungskommunikationsnetz (8) für eine spezifische Industrieanlage oder ein spezifisches Industriegebäude verbunden werden können, wobei das Automatisierungskommunikationsnetz mehrere Netzknoten enthält, wobei das Verfahren Folgendes umfasst:
- Kommunizieren mit mindestens einer Speichervorrichtung (6, 7, 9a bis 11a), die ausgelegt ist, Konfigurationsparameter, die einer entsprechenden Netzvorrichtung (9, 10, 11) zugeteilt sind, zu speichern, und
- Senden von anzeigbaren Informationen an eine graphische Anzeige (18) und Empfangen von Eingangsinformationen mit einer Konfigurationsparameterduplizieranforderung von einer Anwendereingabevorrichtung (19), wobei
- automatisches Ausführen der Konfiguration, nachdem eine Duplizieranforderung von der Anwendereingabevorrichtung (19) empfangen wurde, durch
- Empfangen von Eingangsinformationen, die eine Quellennetzvorrichtung (A) und eine ausgewählte Gruppe von Zielnetzvorrichtungen (B, C) identifizieren, wobei die ausgewählte Gruppe von Zielnetzvorrichtungen (B, C) Zielnetzvorrichtungen mit einem ersten und mindestens einem anderen Vorrichtungstyp enthält,
- Erfassen aus der mindestens einen Speichervorrichtung (6, 7, 9a bis 11a) von Quellenkonfigurationsparametern, die der Quellennetzvorrichtung (A) zugeteilt sind, und Einschränkungseinstellungen, die spezifizieren, dass für den ersten Vorrichtungstyp eine bestimmte Gruppe von Konfigurationsparametern geschützt ist, während für mindestens einen anderen Vorrichtungstyp die bestimmte Gruppe von Konfigurationsparametern nicht geschützt ist,
- Erzeugen von Zielkonfigurationsparametern für die ausgewählte Gruppe von Zielnetzvorrichtungen in Übereinstimmung mit den Einschränkungseinstellungen durch Eliminieren für Zielnetzvorrichtungen mit dem ersten Vorrichtungstyp von den Quellenkonfigurationsparametern solche Konfigurationsparameter, die durch die Einschränkungseinstellungen für den ersten Vorrichtungstyp als spezifische geschützte Konfigurationsparameter angegeben sind, die nicht automatisch in der ausgewählten Gruppe von Zielnetzvorrichtungen (B, C) zu überschreiben sind, um zu gewährleisten, dass solche Konfigurationsparameter, die nicht zu ändern sind, in der ausgewählten Gruppe von Zielnetzvorrichtungen unberührt bleiben,
- Senden der Zielkonfigurationsparameter an die mindestens eine Speichervorrichtung (6, 7, 9a bis 11a), um sie darin zu speichern, und
- Ausführen der Konfiguration der ausgewählten Gruppe von Zielnetzvorrichtungen durch Anwenden der Zielkonfigurationsparameter.

14. Konfigurationsvorrichtung (1) nach einem der Ansprüche 1 bis 12, wobei die entsprechende Netzvorrichtung einen Vorrichtungstyp besitzt, der aus einem beliebigen aus der Gruppe ausgewählt ist von: einem Schalter, einem Router, einem VLAN-Schalter, einer Firewall, einem Operations-PC, einer Feldsteuereinheit, einer E/A-Karte und einem Drucker.

15. Konfigurationsvorrichtung (1) nach einem der Ansprüche 1 bis 12, wobei das Automatisierungskommunikationsnetz aus Unternetzen von verschiedenen Netztypen besteht, die miteinander verbunden sind, wobei sich die Unternetze aus einer hierarchischen Gruppierung der Netzvorrichtungen ergeben.

16. Konfigurationsvorrichtung (1) nach einem der Ansprüche 1 bis 12, wobei gleichzeitig mit dem Anwenden der Konfigurationsparameter auf eine bestimmte Zielvorrichtung, der Typ der Zielvorrichtung geändert wird.

## Revendications

1. Dispositif de configuration (1) pour une configuration mise en oeuvre par ordinateur d'une pluralité de dispositifs réseau (9, 10, 11) connectables à un réseau de communication automatisé (8) pour une installation ou un bâtiment industriel(le) spécifique, le réseau de communication automatisé contenant une pluralité de noeuds de réseau, le dispositif de configuration comprenant :
• une unité d'interface de stockage (4) destinée à communiquer avec au moins un dispositif de stockage (6, 7, 9a à 11a) conçu pour stocker des paramètres de configuration attribués à un dispositif réseau (9, 10, 11) correspondant, et
• une unité de traitement (2) connectée à l'unité d'interface de stockage (4) et à une unité d'interface utilisateur (5), l'unité d'interface utilisateur (5) étant conçue pour transmettre des informations affichables sur un écran graphique (18) et pour recevoir des informations d'entrée à partir d'un dispositif d'entrée utilisateur (19) :
• l'unité de traitement (2) étant conçue pour exécuter automatiquement la configuration, après avoir reçu une requête de duplication à partir du dispositif d'entrée utilisateur (19), en
• recevant des informations d'entrée identifiant un dispositif réseau source (A) et un groupe sélectionné de dispositifs réseau cible (B, C), le groupe sélectionné de dispositifs réseau cible (B, C) comportant des dispositifs réseau cible avec un premier et au moins un autre type de dispositif,
• récupérant à partir de l'au moins un dispositif de stockage (6, 7, 9a à 11a) des paramètres de configuration source attribués au dispositif réseau source (A), et des paramètres de restriction spécifiant que pour le premier type de dispositif un ensemble particulier de paramètres de configuration est protégé, tandis que pour au moins un autre type de dispositif l'ensemble particulier de paramètres de configuration n'est pas protégé,
• générant des paramètres de configuration cible pour le groupe sélectionné de dispositifs réseau cible selon les paramètres de restriction en éliminant, pour des dispositifs réseau cible avec le premier type de dispositif, à partir des paramètres de configuration source les paramètres de configuration qui sont indiqués par les paramètres de restriction pour le premier type de dispositif comme étant des paramètres de configuration protégés spécifiques qui ne doivent pas être outrepassés automatiquement dans le groupe sélectionné de dispositifs réseau cible (B, C) pour assurer que ces paramètres de configuration qui ne doivent pas être changés restent intacts dans le groupe sélectionné de dispositifs réseau cible,
• transmettant les paramètres de configuration cible à l'au moins un dispositif de stockage (6, 7, 9a à 11a) pour un stockage dans celui-ci, et
• exécutant la configuration du groupe sélectionné de dispositifs réseau cible en appliquant les paramètres de configuration cible.

2. Dispositif de configuration (1) selon la revendication 1, dans lequel l'unité de traitement (2) est conçue pour récupérer les paramètres de restriction à partir de l'au moins un dispositif de stockage (6, 7, 9a à 11a) dans lequel ils sont stockés
• soit individuellement pour chaque dispositif réseau ou pour chaque paramètre de configuration,
• soit comme un attribut d'un type de dispositif réseau prédéfini, chaque dispositif réseau recevant un type de dispositif réseau correspondant.

3. Dispositif de configuration (1) selon la revendication 1 ou 2, dans lequel l'unité de traitement (2) est conçue pour récupérer les paramètres de restriction en transmettant une demande utilisateur à l'écran graphique (18) pour sélectionner des paramètres de configuration individuels ou une sous-partie prédéfinie des paramètres de configuration source et en recevant les informations d'entrée résultantes.

4. Dispositif de configuration (1) selon l'une quelconque des revendications précédentes, dans lequel le dispositif de configuration comprend une unité d'interface réseau (3) connectée à l'unité de traitement (2) pour communiquer avec les dispositifs réseau source et/ou cible (9, 10, 11) sur le réseau de communication automatisé (8), les dispositifs réseau source et/ou cible (9, 10, 11) comportant chacun un des dispositifs de stockage (9a à 11a), et l'unité de traitement (2) étant conçue pour récupérer les paramètres de configuration respectifs et/ou initier un stockage de ceux-ci dans le dispositif respectif des dispositifs de stockage.

5. Dispositif de configuration (1) selon la revendication 4, dans lequel l'unité de traitement (2) est conçue, avant de récupérer les paramètres de configuration source, pour découvrir quels dispositifs réseau sont connectés au réseau de communication automatisé.

6. Dispositif de configuration (1) selon la revendication 4 ou 5, dans lequel l'unité de traitement (2) est conçue, avant d'initier un stockage des paramètres de configuration cible, pour transmettre à l'écran graphique (18) une demande utilisateur d'acceptation des paramètres de configuration cible, pour recevoir les informations d'entrée résultantes et pour initier le stockage uniquement si les informations d'entrée indiquent l'acceptation des paramètres de configuration cible.

7. Dispositif de configuration (1) selon l'une quelconque des revendications 4 à 6, dans lequel l'unité de traitement (2) est conçue pour vérifier si le stockage des paramètres de configuration cible a été exécuté correctement.

8. Dispositif de configuration (1) selon l'une quelconque des revendications précédentes, dans lequel les paramètres de configuration source contiennent un paramètre sur un type de dispositif réseau affecté au dispositif réseau source.

9. Dispositif de configuration (1) selon l'une quelconque des revendications précédentes, dans lequel l'unité de traitement (2) est conçue pour reconnaître la requête de duplication émise à partir du dispositif d'entrée utilisateur (19) lorsqu'une icône de duplication dans un menu utilisateur est sélectionnée.

10. Dispositif de configuration (1) selon l'une quelconque des revendications précédentes 1 à 8, dans lequel l'unité de traitement (2) est conçue pour reconnaître la requête de duplication émise à partir du dispositif d'entrée utilisateur (19) lorsqu'une icône de duplication dans une représentation graphique du dispositif réseau source est sélectionnée et que la représentation graphique du dispositif réseau source est glissée vers et déposée sur une représentation graphique du dispositif réseau cible.

11. Dispositif de configuration (1) selon l'une quelconque des revendications précédentes, dans lequel l'unité de traitement (2) est conçue pour recevoir des informations d'entrée identifiant l'au moins un dispositif réseau cible comme un groupe de dispositifs réseau cible, les informations d'entrée indiquant une sélection de plusieurs dispositifs réseau individuels, ou un type de dispositif réseau, ou un niveau de hiérarchie dans une structure arborescente de la pluralité de dispositifs réseau.

12. Dispositif de configuration (1) selon l'une quelconque des revendications précédentes, dans lequel l'unité de traitement (2) est conçue pour ajouter à chaque paramètre de configuration cible une marque indiquant que le paramètre de configuration a été copié et pour initier un stockage de la marque pour un affichage graphique ultérieur.

13. Procédé pour une configuration mise en oeuvre par ordinateur d'une pluralité de dispositifs réseau (9, 10, 11) connectables à un réseau de communication automatisé (8) pour une installation ou un bâtiment industriel(le) spécifique, le réseau de communication automatisé contenant une pluralité de noeuds de réseau, le procédé comprenant :
• communiquer avec au moins un dispositif de stockage (6, 7, 9a à 11a) conçu pour stocker des paramètres de configuration attribués à un dispositif réseau (9, 10, 11) correspondant, et
• transmettre des informations affichables sur un écran graphique (18) et recevoir des informations d'entrée avec une requête de duplication de paramètres de configuration à partir d'un dispositif d'entrée utilisateur (19) :
dans lequel
• exécuter automatiquement la configuration, après avoir reçu la requête de duplication à partir du dispositif d'entrée utilisateur (19), en
• recevant des informations d'entrée identifiant un dispositif réseau source (A) et un groupe sélectionné de dispositifs réseau cible (B, C), le groupe sélectionné de dispositifs réseau cible (B, C) comportant des dispositifs réseau cible avec un premier et au moins un autre type de dispositif,
• récupérant à partir de l'au moins un dispositif de stockage (6, 7, 9a à 11a) des paramètres de configuration source attribués au dispositif réseau source (A), et des paramètres de restriction spécifiant que pour le premier type de dispositif un ensemble particulier de paramètres de configuration est protégé, tandis que pour au moins un autre type de dispositif l'ensemble particulier de paramètres de configuration n'est pas protégé,
• générant des paramètres de configuration cible pour le groupe sélectionné de dispositifs réseau cible selon les paramètres de restriction en éliminant, pour des dispositifs réseau cible avec le premier type de dispositif, à partir des paramètres de configuration source les paramètres de configuration qui sont indiqués par les paramètres de restriction pour le premier type de dispositif comme étant des paramètres de configuration protégés spécifiques qui ne doivent pas être outrepassés automatiquement dans le groupe sélectionné de dispositifs réseau cible (B, C) pour assurer que ces paramètres de configuration qui ne doivent pas être changés restent intacts dans le groupe sélectionné de dispositifs réseau cible,
• transmettant les paramètres de configuration cible à l'au moins un dispositif de stockage (6, 7, 9a à 11a) pour un stockage dans celui-ci, et
• exécutant la configuration du groupe sélectionné de dispositifs réseau cible en appliquant les paramètres de configuration cible.

14. Dispositif de configuration (1) selon l'une quelconque des revendications 1 à 12, dans lequel le dispositif réseau correspondant a un type de dispositif sélectionné à partir d'un élément quelconque du groupe suivant : un commutateur, un routeur, un commutateur VLAN, un pare-feu, un PC d'opérations, un contrôleur sur place, une carte d'E/S, et une imprimante.

15. Dispositif de configuration (1) selon l'une quelconque des revendications 1 à 12, dans lequel le réseau de communication automatisé consiste en sous-réseaux de différents types de réseau interconnectés, les sous-réseaux résultant d'un groupement hiérarchique des dispositifs réseau.

16. Dispositif de configuration (1) selon l'une quelconque des revendications 1 à 12, dans lequel simultanément à l'application de paramètres de configuration à un dispositif cible particulier, le type du dispositif cible est changé.
